# EUROPÄISCHE PATENTSCHRIFT

(11) **EP 0 625 992 B1**
(45) Veröffentlichungstag und Bekanntmachung des Hinweises auf die Patenterteilung: **28.05.1997**
(21) Anmeldenummer: 93917384.5
(22) Anmeldetag: 03.02.1993
(51) Int. Cl.: C08B 37/00, C08B 31/18, C08B 15/04, C11D 3/22

(54) **VERFAHREN ZUR HERSTELLUNG VON POLYCARBOXYLATEN AUF POLYSACCHARID-BASIS**
PROCESS FOR PRODUCING POLYSACCHARIDE-BASED POLYCARBOXYLATES
PROCEDE DE FABRICATION DE POLYCARBOXYLATES A BASE DE POLYSACCHARIDES

(30) Priorität: 11.02.1992 DE 4203923
(43) Veröffentlichungstag der Anmeldung: 30.11.1994
(73) Patentinhaber: Henkel Kommanditgesellschaft auf Aktien, 40191 Düsseldorf (DE)
(72) Erfinder: ENGELSKIRCHEN, Konrad, D-4005 Meerbusch (DE); FISCHER, Herbert, D-4000 Düsseldorf 1 (DE); VERHOLT, Hans-Wilhelm, D-4018 Langenfeld (DE)
(86) Internationale Anmeldenummer: EP9300244
(87) Internationale Veröffentlichungsnummer: WO9316110

(56) Entgegenhaltungen:
- EP-A- 0 455 522
- DE-A- 941 282
- DE-A- 967 144
- US-A- 2 472 590
- US-A- 3 478 752

## Beschreibung

Die Erfindung betrifft ein Verfahren zur Herstellung von Polycarboxylaten durch selektive Oxidation von Polysacchariden mit Stickstoffdioxid sowie die Verwendung solcherart hergestellter Polycarboxylate als Builder beziehungsweise Co-Builder in Wasch- oder Reinigungsmitteln.

Zur Herstellung von Polycarboxylaten durch oxidative Behandlung von Polysacchariden, beispielsweise Cellulose, Stärke und Dextrinen, besteht umfangreiches Wissen. Verwiesen wird beispielsweise auf Houben-Weyl "Methoden der organischen Chemie", Thieme-Verlag, Stuttgart (1987) Bd. E 20, Makromolekulare Stoffe, hier das Unterkapitel "Polysaccharid-Derivate" bearbeitet von Dr. K. Engelskirchen, a.a.O. Seite 2042 ff, insbesondere Seite 2124 ff (Oxidationsprodukte der Cellulose) und Seite 2166 ff (Oxidierte Stärken). Verwiesen sei weiter auf die Veröffentlichung "Cellulose Chemistry and Its Applications" (1983), John Wiley & Sons, Chichester, GB, dort insbesondere T.P.Nevell, "Oxidation of Cellulose" (Kapitel 10) sowie die umfangreiche dort zitierte Literatur, a.a.O Seite 262 bis 265.

Grob zusammenfassend gilt: Eine Vielzahl von Oxidationsmitteln ist für die Oxidation von Polysacchariden, insbesondere von ausschließlich aus Glucose aufgebauten Polyglucosanen gebräuchlich. Genannt seien beispielsweise (Luft)-Sauerstoff, Wasserstoff-Peroxid, Natriumhypochlorit beziehungsweise -bromit, Periodsäure beziehungsweise Periodate, Blei(IV)-Acetat, Stickstoffdioxid und Cer(IV)-Salze. Diese Oxidationsmittel reagieren sehr unterschiedlich mit den Anhydroglucoseeinheiten, vgl. beispielsweise die Formelbilder in Houben-Weyl a.a.O. Seite 2124. So bewirken beispielsweise Perjodate oder Blei(IV)-Acetat eine C-C Spaltung der Anhydroglucose-Ringe; man erhält aus Cellulose die sogenannte 2,3-Dialdehydcellulose und analog aus Stärke Dialdehydstärke. Bekannt ist außerdem, daß bei der Einwirkung von Stickstoffdioxid auf Cellulose die Oxidation der primären Alkoholgruppe zur Carboxylgruppe die weit überwiegende Reaktion ist. Das Oxidationsmittel, in der Regel im Gleichgewicht mit Distickstofftetroxid vorliegend, kann dabei gasförmig oder gelöst in einem inerten organischen Lösungsmittel eingesetzt werden, vgl. auch hier Houben-Weyl a.a.O. Seite 2125 und die dort in diesem Zusammenhang genannte Primärliteratur. Auch von der Stärke ausgehend lassen sich entsprechend weitgehend selektive Oxidationen der primären Alkoholgruppe der Anhydroglucoseeinheiten zur Carboxylgruppe bewerkstelligen. So ist aus der US-amerikanischen Patentschrift US-A-2 472 590 die Oxidation von Stärke mit gasförmigem oder in Wasser beziehungsweise in verschiedenen organischen Lösungsmitteln gelöstem Stickstoffdioxid bei Raumtemperatur und Normaldruck bekannt. Die US-amerikanische Patentschrift US-A-3 478 752 offenbart, daß eine breiige Holzmasse mit Stickstoffdioxid in einem Druckbehälter bei einer Temperatur von 40 bis 45 °C und einem Druck von 3,5 bar umgesetzt werden kann. Dort wird flüssiges Stickstoffdioxid in sehr großem Überschuß von mindestens etwa 88 Molequivalenten, bezogen auf zu oxidierendes Substrat, eingesetzt.

Unter diesen Bedingungen erhält man die annähernd vollständige Umwandlung der primären Alkoholgruppen der Polysaccharide in Carboxylgruppen erst nach sehr langen Reaktionszeiten, die unter Umständen bis zu mehreren Tagen betragen können. Außerdem werden bei den bekannten Verfahren hohe Stickstoffdioxidmengen, bezogen auf zu oxidierendes Polysaccharid, benötigt.

Die vorliegende Erfindung will eine Verbesserung der Herstellung derartiger Oxidationsprodukte von Polysacchariden ermöglichen, um ihre Verfügbarkeit zu sichern, da die entstehenden Polycarboxylate als potentielle Inhaltsstoffe, insbesondere als Builderbeziehungsweise Co-Builder-Komponenten, für Wasch- und Reinigungsmittel in Frage kommen. Dies gilt auch für die Salze derartiger Polycarboxylate, insbesondere ihre wasserlöslichen Salze, da der Einsatz von oxidierten Polysaccharidverbindungen zur Waschkraftverstärkung von Wasch- und/oder Reinigungsmitteln an sich seit Jahrzehnten bekannt und immer wieder untersucht worden ist. Verwiesen wird in diesem Zusammenhang beispielsweise auf die niederländische Patentschriften NL69883 und NL78087. Der Ersatz von Builder-Systemen auf Phosphatbasis durch mit Lewis-Säuren behandelter 6-Carboxycellulose wird in den US-amerikanischen Patentschriften US 3 740 339 und US 3 790 561 beschrieben. Auch die niederländische Patentanmeldung NL 70/02 500 will oxidierte Polysaccharid-Derivate als Builder-System zur Steigerung der Waschkraft in insbesondere Textilwaschmitteln einsetzen. Hier ist allerdings nicht auf selektiv am C₆-Atom oxidierte Derivate, sondern auf durch substantielle Spaltung der Anhydroglucoseeinheiten zwischen C₂ und C₃ entstehende Oxidationsprodukte abgestellt. Schließlich beschreibt die europäische Patentanmeldung EP425369 tensidhaltige Stoffgemische zur Textilwäsche, die ein Builder-System aus konventioneller Phosphatverbindung,

Zeolith und Oxidationsprodukten von Cellulose, Stärke oder Glucosesirup enthalten. Nachvollziehbare Angaben zur Herstellung der dort beschriebenen oxidierten Saccharidverbindungen sind nicht angegeben. Außerdem wird eine Stabilisierung der primär anfallenden Polysaccharidoxidate durch eine katalytische Hydrierung als wünschenswert bezeichnet.

Die erfindungsgemäße Lehre geht von der überraschenden Erkenntnis aus, daß Polycarboxylate aus Polysacchariden in einem einfachen Verfahren kostengünstig in hohen Ausbeuten zu gewinnen sind, wenn die Oxidationsreaktion mit Stickstoffdioxid/Distickstofftetroxid in Gegenwart von Sauerstoff bei erhöhten Temperaturen durchgeführt wird. Die Formulierung "Stickstoffdioxid/Distickstofftetroxid" steht dabei für das unter den jeweiligen Reaktionsbedingungen vorliegende Gleichgewichtsgemisch aus Stickstoffdioxid und seinem Dimeren Distickstofftetroxid.

Gegenstand der Erfindung ist dementsprechend ein Verfahren zur Herstellung von Polycarbonsäuren oder deren Salzen aus Polysacchariden durch Oxidation mit Stickstoffdioxid/Distickstofftetroxid unter Umwandlung zumindest eines Teils der primären Alkoholgruppen der Polysaccharide in Carboxylgruppen sowie gegebenenfalls wenigstens anteilsweiser Neutralisation der entstehenden Carbonsäuregruppen, wobei die Oxidationsreaktion in einem geschlossenen Reaktionssystem bei Drucken von 2 bar bis 10 bar bei einer Temperatur von mindestens 30 °C in Gegenwart von Sauerstoff durchgeführt wird, welches dadurch gekennzeichnet ist, daß Stickstoffdioxid/Distickstofftetroxid in solchen Mengen eingesetzt wird, daß bei rechnerisch vollständiger Verschiebung des Gleichgewichtes auf die Seite des Stickstoffdioxids dieses in Mengen von höchstens 2 Molequivalenten, bezogen auf den Gehalt an eine primäre Alkoholgruppe enthaltendem Monomerbaustein des Polysaccharids, enthalten ist. Als Obergrenze des Temperaturbereiches kann dabei eine Temperatur von 150 °C gelten, da bei höheren Temperaturen zunehmend Zersetzung beobachtet wurde.

Die Oxidationsreaktion wird daher vorzugsweise bei Temperaturen von 30 °C bis 70 °C, insbesondere von 40 °C bis 60 °C durchgeführt. Besonders gute Ergebnisse erzielt man bei Durchführung der Oxidation in einem geschlossenen Reaktionssystem bei Drucken von insbesondere 2 bar bis 6 bar, gemessen bei der Reaktionstemperatur. Diese Drucke im Reaktionsgefäß werden erfindungsgemäß durch Aufpressen von gasförmigem Sauerstoff, allein oder im Gemisch mit unter den Reaktionsbedingungen inertem Gas, eingestellt. Dabei wird die Oxidationsreaktion des erfindungsgemäßen Verfahrens vorzugsweise so geführt, daß der Sauerstoff-Partialdruck im Reaktionssystem 0,1 bar bis 9 bar, insbesondere 0,5 bar bis 6 bar, beträgt. Das Aufpressen kann einmalig beim Reaktionsbeginn oder mehrfach, gewünschtenfalls kontinuierlich, während der Reaktion erfolgen. Bei letztgenannter Reaktionsführung ist als besonderer Vorteil zu erwähnen, daß die Oxidationsreaktion temperatur- oder druckabhängig über die Sauerstoffdosierung gesteuert werden kann. Vorzugsweise regelt man die Sauerstoffzugabe so, daß die Reaktionstemperatur im obengenannten Bereich von 30 °C bis 70 °C bleibt.

Als inerte, das heißt bei den jeweils gewünschten Verfahrensbedingungen nicht reagierende Gase können Edelgase wie Helium oder Argon und Kohlendioxid, insbesondere aber Stickstoff, aber auch beliebige Mischungen derartiger Gase eingesetzt werden. Der Sauerstoffgehalt in der Gasmischung beträgt dabei vorzugsweise 1 Vol.-% bis 30 Vol.-%, insbesondere von 3 Vol.-% bis 10 Vol.-%. Eine bevorzugte Ausführungsform des erfindungsgemäßen Verfahrens beinhaltet die Zuführung von Sauerstoff durch das Aufpressen von Luft.

Eine weitere bevorzugte Ausführungsform des Verfahrens ist dadurch gekennzeichnet, daß im Reaktionssystem vor Beginn der Oxidationsreaktion ein Druck von weniger als 10 bar, insbesondere von 2 bar bis 6 bar, bei der gewünschten Reaktionstemperatur durch Aufpressen eines genannten Inertgases eingestellt wird und anschließend Sauerstoff oder ein Gemisch aus Sauerstoff mit einem genannten Inertgas, mehrfach, gewünschtenfalls kontinuierlich, aufgepresst wird. Die Zugabe von Stickstoffdioxid/Distickstofftetroxid kann dabei vor oder nach der Sauerstoffzugabe beziehungsweise dem Beginn der Sauerstoffzugabe erfolgen. Dabei kann es erforderlich sein, das Reaktionsgefäß nach dem anfänglichen Aufpressen des Inertgases auf die gewünschte Reaktionstemperatur aufzuheizen. Während des Ablaufs der Oxidationsreaktion, die zweckmäßig unter intensiver Durchmischung der Reaktionspartner erfolgt, kann die Reaktionstemperatur in der Regel ohne äußere Heizung allein durch die Zugabemenge des Sauerstoffs gehalten werden.

Die Oxidation des Polysaccharids kann gemäß einer Ausführungsform der Erfindung im Suspensionsverfahren, bei dem es als Suspension in einer unter den Reaktionsbedingungen weitgehend inerten Flüssigkeit eingesetzt wird, erfolgen.

Bei der Oxidation im Suspensionsverfahren sind als Suspensionsmittel für das Polysaccharid organische Flüssigkeiten geeignet, die einerseits Stickstoffdioxid/Distickstofftetroxid sowie Sauerstoff gut lösen und andererseits diesen gegenüber unter den Reaktionsbedingungen weitgehend inert sind. In Frage kommende Suspensionsmittel sind Kohlenwassserstoffe, vor allem halogenierte Kohlenwasserstoffe, insbesondere Tetrachlorkohlenstoff. Dabei ist eine breite Variation der Suspensionsmittelmenge ohne signifikanten Einfluß auf das Oxidationsergebnis möglich. In der Regel liegt das Gewichtsverhältnis von Suspensionsmittel zu Polysaccharid im Bereich von 3:1 bis 8:1. Nach Beendigung der Oxidationsreaktion wird das Suspensionsmittel, gegebenenfalls nach Entspannen des Überdruckes im Reaktionssystem, vom oxidierten Polysaccharid abgetrennt, was durch einfache Filtration oder Zentrifugieren geschehen kann. Es kann direkt oder gewünschtenfalls nach Aufarbeitung in der Oxidationsreaktion wiederverwendet werden. Das Oxidationsprodukt wird gewünschtenfalls mit einem organischen Lösungsmittel und/oder Wasser beziehungsweise Gemischen aus diesen gewaschen und getrocknet. Der Trocknungsschritt nach dem Waschen mit Wasser kann entfallen, wenn die Weiterverarbeitung des erhaltenen Polycarboxylates zu wasserhaltigen flüssigen oder pastenförmigen Produkten erfolgen soll.

Die Derivatisierung der Polysaccharide kann gemäß einer weiteren Ausführungsform der Erfindung aber auch in Abwesenheit eines Suspensions- oder Lösungsmittels, das heißt im sogenannten Trockenoxidationsverfahren, durchgeführt werden. Dabei gelangt das Oxidationsmittel - Stickstoffdioxid und Sauerstoff - aus der Gasphase direkt auf die festen, möglichst intensiv durchmischten Substrate zur Einwirkung.

Die Durchmischung kann unter anderem im Fließbett mit durchströmendem, die Oxidationsmittel enthaltendem Gas oder in einer Wirbelschicht unter Einsatz von Intensivmischern, zum Beispiel von Druvatherm^{(R)}-Mischern der Firma Lödige, erreicht werden.

Insbesondere im Falle von Stärke, die im nativen Zustand oft zur Agglomeration und zur in der Fließbetttechnik gefürchteten Kanalbildung neigt, kann dabei das Fließverhalten durch den Zusatz geringer Mengen von insbesondere festen Additiven, zu denen beispielsweise Magnesiumoxid, Calciumfluorid, Calciumphosphat oder pyrogenes Siliziumdioxid, insbesondere das unter dem Namen Aerosil^{(R)} vertriebene Siliziumdioxid, signifikant verbessert werden. In dieser Hinsicht hohe Effekte werden bereits beim Einsatz niedriger Additivmengen von vorzugsweise 0,1 Gew.-% bis 5 Gew.-%, insbesondere 0,25 Gew.-% bis 1 Gew.-%, jeweils bezogen auf zu oxidierendes Polysaccharid, erreicht. So behandelte Stärken zeigen hinsichtlich Durchmischbarkeit ein nahezu Flüssigkeits-analoges Verhalten.

Im Rahmen des Trockenoxidationsverfahrens kann das Reaktionsgemisch nach der eigentlichen Oxidationsrektion direkt in Wasser aufgenommen und über Wasserwasch- und Filtrationsprozesse gereinigt und isoliert werden. Ein erheblicher Teil der bei Reaktionsende im Reaktionssystem vorliegenden Stickoxide kann auch über einfache Entgasungsprozesse entfernt werden; so führt im Regelfall bereits eine einfache Vakuumbehandlung der Reaktionsmischung ohne wäßrige Aufarbeitung zu Produkten mit akzeptabel niedrigen Nitrit- und Nitratgehalten.

Für das erfindungsgemäße Verfahren ist die Natur des eingesetzten Polysaccharids weitgehend unkritisch. Voraussetzung ist lediglich, daß es primäre Alkoholgruppen enthaltende Kohlenhydrateinheiten enthält. In Frage kommen alle nativen Polyglucosane, insbesondere Stärke und/oder Cellulose, aber auch andere Polysaccharide, zum Beispiel Polygalactomannane wie Guaran und Carubin. Die Polysaccharide können auch in chemisch oder physikalisch modifizierter Form verwendet werden, sofern sie noch oxidierbare primäre Alkoholgruppen enthalten. Aus wirtschaftlichen Gründen sind Stärken unterschiedlicher Provenienz, insbesondere Kartoffelstärke, Weizenstärke, Maisstärke oder Tapiokastärke , bevorzugt. Das eingesetzte Polysaccharid enthält vorzugsweise nicht mehr als 20 Gew.-%, insbesondere 4 Gew.-% bis 10 Gew.-% Wasser.

Stickstoffdioxid/Distickstofftetroxid wird im erfindungsgemäßen Verfahren vorzugsweise in solchen Mengen eingesetzt, daß bei rechnerisch vollständiger Verschiebung des Gleichgewichtes auf die Seite des Stickstoffdioxids dieses in Mengen von 0,1 bis 1 Molequivalenten, bezogen auf den Gehalt an eine primäre Alkoholgruppe enthaltendem Monomerbaustein des Polysaccharids, vorliegt.

Die Oxidationsreaktion des erfindungsgemäßen Verfahrens wird unter Einsatz der genannten Polyglucosane vorzugsweise über einen solchen Zeitraum geführt, daß das Oxidationsprodukt im statistischen Mittel zu wenigstens 15 Mol-% aus oxidierten Anhydroglucoseeinheiten der Formel I 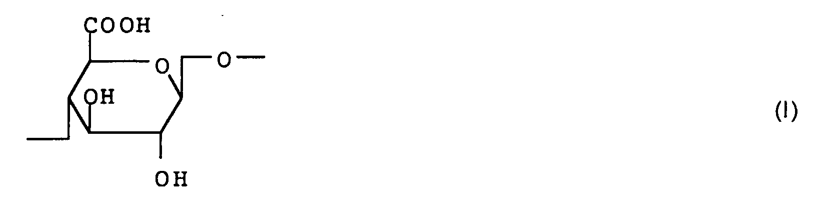 besteht, was einem Carboxylgruppengehalt von mindestens 4 Gew.-% entspricht.

Durch ein derartiges Verfahren erhält man Polycarboxylate auf Polyglucosan-Basis, welche die oxidierten Anhydroglucoseeinheiten der Formel I vorzugsweise zu wenigstens 25 Mol-%, insbesondere zu wenigstens 35 Mol-% bis 40 Mol-% im Molekül enthalten, wobei als weiterer Vorteil keine wesentlichen Mengen anderer Oxidations-Folgeprodukte vorliegen.

Hoch oxidierte Produkte, das heißt solche mit einem Gehalt an Einheiten gemäß Formel I von bis zu etwa 95 Mol-%, insbesondere bis 100 Mol-%, bevorzugt im Bereich von etwa 70 Mol-% bis 100 Mol-%, entsprechend einem Carboxylgruppengehalt von bis zu ca. 25Gew.-%, werden beispielsweise beim Suspensionsverfahren bei Verwendung von Stärke in einer Aufschlämmung in Tetrachlorkohlenstoff unter Einsatz von etwa 0,5 Molequivalenten Stickstoffdioxid bei 2 bar bis 6 bar und 50 °C innerhalb von etwa 4 Stunden bis 6 Stunden.

Im Anschluß an die Oxidationsreaktion und die gewünschtenfalls vorgenommene Aufarbeitung wie beschrieben ist es möglich, wenigstens einen Teil der Carboxylgruppen des Oxidationsprodukts durch Behandeln mit einem basischen Reagenz zu neutralisieren, das heißt von der Säure- in die Salzform zu überführen. Als Neutralisationsmittel wird vorzugsweise eine wäßrige Lösung, die Alkalihydroxid, Ammoniumhydroxid und/oder organische Base enthält, verwendet. Auch direkt im Anschluß an die Oxidationsreaktion ist die Neutralisation möglich, beispielsweise durch Begasen des Reaktionsgefäßes mit Ammoniak. Die Salzbildung ist auch unter reduzierenden Bedingungen, beispielsweise unter Verwendung von Natriumborhydrid, möglich. Vorzugsweise wird das Neutralisationsmittel in solchen Mengen eingesetzt, daß sämtliche Carboxylgruppen des Oxidationsprodukts in die Salzform überführt werden. Dabei ist sowohl die Zugabe des Oxidationsproduktes zum Neutralisationsmittel als auch die Zugabe des Neutralisationsmittels zum Oxidationsprodukt möglich. Die Salzbildung kann auch unter den Bedingungen der Anwendung beziehungsweise Weiterverarbeitung der Polycarboxylate in deren Säureform erfolgen, beispielsweise bei der Herstellung oder dem Einsatz von Wasch- oder Reinigungsmitteln durch übliche alkalische Bestandteile derartiger Mittel.

Die nach dem erfindungsgemäßen Verfahren hergestellten Polycarboxylate werden vorzugsweise als Builder oder Co-Builder in Wasch- oder Reinigungsmitteln verwendet. In derartigen Mitteln werden sie vorzugsweise als Co-Builder in Mengen von 0,5 Gew.-% bis 10 Gew.-%, insbesondere 2 Gew.-% bis 7 Gew.-%, bezogen jeweils auf das Gesamtgewicht des Mittels, die Zeolith als Haupt-Builder enthalten, verwendet. Besonders bevorzugt werden sie in letztgenannten Mitteln verwendet, die Zeolith-NaA, wie er beispielsweise im Zusammenhang mit Textilwaschmitteln in der deutschen Patentschrift DE 24 12 837 beschrieben ist, als Haupt-Builder und erfindungsgemäß hergestellte Polycarbonsäuren oder deren Salze in Mengenverhältnissen von 2:1 bis 5:1 enthalten. Die Zusammensetzung der Wasch- und/oder Reinigungsmittel kann ansonsten im Rahmen bekannter Rezepturen praktisch beliebig gewählt werden.

### Beispiele

### Beispiel 1

275,2 g Kartoffelstärke (1,6 mol bezogen auf Anhydroglucoseeinheit) mit einem Feuchtigkeitsgehalt von ca. 6 Gew.-% wurden in 825 g Tetrachlorkohlenstoff suspendiert und in einen 2 l-Rührautoklaven überführt. Nach Evakuieren des Autoklaven und Spülen mit Stickstoff wurden 36,8 g kondensiertes Distickstofftetroxid (0,4 mol) zugegeben. Das Reaktionsgemisch wurde innerhalb von 30 Minuten auf 50 °C aufgeheizt. Der Innendruck im Autoklaven betrug 0,5 bar (eingestellt mit Stickstoff). Durch Aufdrücken von Sauerstoff wurde ein Druck von 6 bar eingestellt. Das Aufdrücken von Sauerstoff wurde wiederholt, sobald der Druck im Autoklaven auf 2 bar abgefallen war. Nach 6 Stunden wurde der Autoklav auf Raumtemperatur gekühlt, entspannt und das Reaktionsgemisch mit 1 1 entmineralisiertem Wasser versetzt. Die Suspension des Oxidationsproduktes wurde über eine Glasfilternutsche filtriert. Das Produkt wurde zunächst mit Aceton, anschließend mit Wasser bis zur neutralen Reaktion der Waschflüssigkeit gewaschen, mit Aceton entwässert und getrocknet (70 °C, Vakuumtrockenschrank). Man erhielt 257 g weißes, pulverförmiges Polycarboxylat mit einer Säurezahl von 245, entsprechend einem durchschnittlichen Gehalt von etwa 0,75 Carboxylgruppen pro Anhydroglucoseeinheit.

Die Bestimmung der Säurezahl des hier erhaltenen Produkts wie auch aller anderen Polysaccharid-Oxidate wurde wie folgt vorgenommen:

Ca. 0,5 bis 0,75 g Oxidat werden in 50 ml entmineralisiertem Wasser suspensiert. Die Suspension wird mit 10 ml 0,5 n alkoholischer Kaliumhydroxidlösung versetzt und 30 Minuten bei Raumtemperatur grührt. Produkte mit Säurezahlen größer ca. 60 gehen dabei in Lösung. Überschüssiges Kaliumhydroxid wird mit 0,5 n wäßriger Salzsäure gegen Phenolphthalein als Indikator zurücktitriert.

Die Angabe der Säurezahl erfolgt in Milligramm KOH pro Gramm Polysaccharid-Oxidat.

### Beispiel 2

Beispiel 1 wurde unter Einsatz von 73,6 g (0,8 mol) kondensiertem Distickstofftetroxid wiederholt, wobei Sauerstoff so in den Autoklaven gepresst wurde, daß innerhalb der ersten Stunde der Reaktion ein Innendruck von 2 bar einhalten wurde, der innerhalb der nächsten Stunde auf 6 bar angehoben wurde. Nach einer Reaktionszeit von 4,5 Stunden war kein Sauerstoffverbrauch, merklich am Druckabfall, mehr festzustellen. Das wie in Beispiel 1 aufgearbeitete Reaktionsprodukt (Ausbeute 256 g) besaß eine Säurezahl von 324, entsprechend einem durchschnittlichen Gehalt von etwa 1 Carboxylgruppe pro Anhydroglucoseeinheit.

### Beispiel 3

Beispiel 1 wurde unter Einsatz von 137,6 g (0,8 mol bezogen auf Anhydroglucoseeinheit) Kartoffelstärke wiederholt, wobei vor dem Aufheizen auf 50 °C mit Sauerstoff im Autoklaven ein Innendruck von 10 bar eingestellt und das Reaktionsgemisch anschließend 6 Stunden bei 50 °C gerührt wurde. Dabei fiel der Innendruck im Verlauf von 1 Stunde auf 1 bar und nach Aufpressen von Sauerstoff bis zu einem Druck von 5 bar in Verlauf von weiteren 2 Stunden auf einen dann konstanten Wert von 3,5 bar ab. Man erhielt nach Aufarbeitung wie beschrieben 127,5 g Oxidationsprodukt mit einer Säurezahl von 343, entsprechend einem durchschnittlichen Gehalt von etwa 1,1 Carboxylgruppen pro Anhydroglucoseeinheit.

### Beispiel 4 - 7

Nach dem in Beispiel 2 angeführten Verfahren wurden jeweils 275,2 g Weizenstärke, Maisstärke, Tapiokastärke und Guarmehl zu Polycarboxylaten oxidiert, isoliert und aufgearbeitet. Man erhielt die in der nachfolgenden Tabelle angegebenen Ausbeuten der durch ihre Säurezahl gekennzeichneten Produkte.

| Beispiel | Polysaccharid | Ausbeute [g] | Säurezahl |
|---|---|---|---|
| 4 | Weizenstärke | 254,5 | 263 |
| 5 | Maisstärke | 256,8 | 347 |
| 6 | Tapiokastärke | 255,8 | 326 |
| 7 | Guarmehl | 188,5 | 261 |

Die gemäß den Beispielen 1 bis 7 hergestellten Produkte wurden durch Zugabe stöchiometrischer Mengen wäßriger Natriumhydroxidlösung oder wäßriger Ammoniumhydroxidlösung in ihre Natrium- beziehungsweise Ammoniumsalze überführt. Diese waren in kaltem Wasser gut löslich.

### Beispiel 8

137,6 g Kartoffelstärke (0,8 mol bezogen auf Anhydroglucoseeinheit) mit einem Feuchtigkeitsgehalt von ca. 6 Gew.-% wurden in einen 21-Rührautoklaven gegeben, der nach Verschließen evakuiert wurde. Die Stärke wurde unter intensivem Durchmischen auf 40 °C aufgezeizt. 36,8 g kondensiertes Distickstofftetroxid (0,4 mol) wurden in den Autoklaven verdampft, die Temperatur der Reaktionsmischung wurde auf 50 °C erhöht. Der Innendruck wurde durch Aufpressen von Stickstoff auf 6 bar eingestellt und durch Aufpressen von Sauerstoff auf 7 bar erhöht. Das Reaktionsgemisch wurde 4 Stunden bei 50 °C und einem Druck von 5 bar bis 7 bar, der durch mehrfaches Aufpressen von Sauerstoff, jeweils nach einem Druckabfall um 1 bar bis 2 bar einreguliert wurde, gehalten. Nach Aufarbeitung analog Beispiel 1 erhielt man 131 g Polycarboxylat mit einer Säurezahl von 340, entsprechend einem durchschnittlichen Gehalt von etwa 1,05 Carboxylgruppen pro Anhydroglukoseeinheit, als weißes Pulver.

### Beispiel 9

Zum Vergleich wurde Beispiel 1 in der Weise wiederholt, daß man nach dem Befüllen mit Distickstofftetroxid einen Innendruck von 1 bar durch Aufpressen von Stickstoff einstellte, innerhalb von 30 Minuten auf 50 °C aufheizte und 6 Stunden bei dieser Temperatur rührte. Dabei stieg der Innendruck kontinuierlich bis auf 4,2 bar an. Nach Isolierung und Aufarbeitung wie beschrieben erhielt man 268 g eines Oxidationsproduktes mit einer Säurezahl von 83, entsprechend einem durchschnittlichen Gehalt von etwa 0,25 Carboxylgruppen pro Anhydroglucoseeinheit.

### Beispiel 10

Zum Vergleich wurde Beispiel 8 in der Weise wiederholt, daß der Innendruck im Autoklaven nach Aufheizen des Reaktionsgemischs durch Aufpressen von Stickstoff auf 3 bar eingestellt wurde und dem Reaktionssystem im Verlauf der Reaktion (5 Stunden bei 50 °C) kein Sauerstoff zugeführt wurde. Der Druck stieg während dieser Zeit auf 4 bar an. Nach Aufbereitung erhielt man 128 g Polycarboxylat als weißes Pulver mit einer Säurezahl von 150, entsprechend einem durchschnittlichen Gehalt von etwa 0,45 Carboxylgruppen pro Anhydroglucoseeinheit.

Der Vergleich der Beispiele 9 und 10 mit den Beispielen 1 bis 8 zeigt, daß bei Zusatz von Sauerstoff zur Reaktionsmischung eine signifikante Erhöhung des Carboxylgruppengehalts im oxidierten Polysaccharid innerhalb akzeptabler Reaktionsbedingungen, insbesondere innerhalb einer relativ kurzen Reaktionszeit, bewirkt.

### Beispiel 11:

10 kg Kartoffelstärke (Wassergehalt: 4,1 Gew.-%) und 0,1 kg Aerosil^{(R)} wurden in einem 50-Liter-Druvatherm^{(R)}-Mischer (Fa. Lödige, Typ DVT; Reaktor mit horizontal angeordnetem Schleuderwerk mit pflugscharähnlichen Schleuderschaufeln) gegeben und intensiv durchmischt (Drehzahl der Schleuderwerke: 50 Upm, die bei allen nachfolgenden Verfahrensschritten eingehalten wurden). Nach Evakuierung des Reaktors wurden bei laufendem Schleuderwerk und unter Kühlung mit Wasser 2,85 kg Stickstoffdioxid aus einer mit Distickstofftetroxid gefüllten Stahlflasche in den Reaktor verdampft. Bei einer Innentemperatur von 30 °C stellte sich dabei ein Innendruck von 1 bar ein. Der Innendruck wurde durch Aufpressen von Stickstoff auf 4 bar erhöht. Nach Aufheizen des Reaktionsgemisches auf 50 °C wurden bei dieser Temperatur 2,4 kg Sauerstoff im Verlauf von 5 Stunden portionsweise so in den Reaktor gedrückt, daß ein Innendruck von maximal 6 bar nicht überschritten wurde.

Nach weiteren 30 Minuten wurde der Reaktorinhalt auf 20 °C abgekühlt. Anschließend wurde der Reaktor über einen mit wäßriger Natronlauge gefüllten Gaswäscher entspannt.

Nach dem Entspannen wurden 30 1 entmineralisiertes Wasser in den Reaktor gefüllt. Die resultierende Carboxylstärke-Suspension wurde abgelassen und filtriert. Der Filterkuchen wurde mehrfach mit Wasser gewaschen, mit Aceton entwässert und bei 70 °C im Vakuum getrocknet.

Erhalten wurden 9,7 kg eines weißen Pulvers mit einer Säurezahl von 326.

## Patentansprüche

1. Verfahren zur Herstellung von Polycarbonsäuren oder deren Salzen aus Polysacchariden durch Oxidation mit Stickstoffdioxid/Distickstofftetroxid unter Umwandlung zumindest eines Teils der primären Alkoholgruppen der Polysaccharide in Carboxylgruppen sowie gegebenenfalls wenigstens anteilsweiser Neutralisation der entstehenden Carbonsäuregruppen, wobei die Oxidationsreaktion in einem geschlossenen Reaktionssystem bei Drucken von 2 bar bis 10 bar bei einer Temperatur von mindestens 30 °C in Gegenwart von Sauerstoff durchgeführt wird, dadurch gekennzeichnet, daß Stickstoffdioxid/Distickstofftetroxid in solchen Mengen eingesetzt wird, daß bei rechnerisch vollständiger Verschiebung des Gleichgewichtes auf die Seite des Stickstoffdioxids dieses in Mengen von höchstens 2 Molequivalenten, bezogen auf den Gehalt an eine primäre Alkoholgruppe enthaltendem Monomerbaustein des Polysaccharids, enthalten ist.

2. Verfahren nach Anspruch 1, dadurch gekennzeichnet, daß die Oxidationsreaktion bei Temperaturen von 30 °C bis 70 °C, insbesondere 40 °C bis 60 °C durchgeführt wird.

3. Verfahren nach Anspruch 1 oder 2, dadurch gekennzeichnet, daß die Oxidationsreaktion bei Drucken von 2 bar bis 6 bar, gemessen bei der Reaktionstemperatur, durchgeführt wird.

4. Verfahren nach Anspruch 3, dadurch gekennzeichnet, daß der Druck im Reaktionssystem durch Aufpressen von gasförmigem Sauerstoff, das einmalig beim Reaktionsbeginn oder mehrfach, gewünschtenfalls kontinuierlich, während der Reaktion erfolgt, eingestellt wird.

5. Verfahren nach Anspruch 4, dadurch gekennzeichnet, daß Sauerstoff in Mischung mit mindestens einem unter den Reaktionsbedingungen inerten Gas eingesetzt wird, wobei der Sauerstoffanteil in der Gasmischung 1 Vol.-% bis 30 Vol.-%, insbesondere von 3 Vol.-% bis 10 Vol.-% beträgt.

6. Verfahren nach Anspruch 5, dadurch gekennzeichnet, daß als inertes Gas Helium, Argon, Kohlendioxid, insbesondere Stickstoff, oder ein Gemisch aus diesen eingesetzt wird.

7. Verfahren nach Anspruch 5, dadurch gekennzeichnet, daß der Druck im Reaktionssystem durch Aufpressen von Luft eingestellt wird.

8. Verfahren nach einem der Ansprüche 4 bis 7, dadurch gekennzeichnet, daß im Reaktionssystem vor Beginn der Oxidationsreaktion ein Druck von weniger als 10 bar, insbesondere von 2 bar bis 6 bar durch Aufpressen eines Inertgases, insbesondere Stickstoff, Helium, Argon, Kohlendioxid oder eines Gemisches aus diesen, eingestellt wird und nach Beginn der Reaktion Sauerstoff oder ein Gemisch aus 1 Vol.-% bis 30 Vol.-%, insbesondere von 3 Vol.-% bis 10 Vol.-%, Sauerstoff mit einem genannten Inertgas, mehrfach, gewünschtenfalls kontinuierlich, aufgepresst wird, so daß der Sauerstoff-Partialdruck im Reaktionssystem 0,1 bar bis 10 bar, insbesondere 0,5 bar bis 6 bar beträgt.

9. Verfahren nach einem der Ansprüche 1 bis 8, dadurch gekennzeichnet, daß das Polysaccharid in Form einer Suspension in einer unter den Reaktionsbedingungen weitgehend inerten Flüssigkeit eingesetzt wird.

10. Verfahren nach Anspruch 9, dadurch gekennzeichnet, daß als unter den Reaktionsbedingungen weitgehend inerte Flüssigkeit ein halogenierter Kohlenwasserstoffen, insbesondere Tetrachlorkohlenstoff, eingesetzt wird.

11. Verfahren nach einem der Ansprüche 1 bis 8, dadurch gekennzeichnet, daß das Polysaccharid in Abwesenheit eines Suspensions- oder Lösungsmittels, gegebenenfalls in Anwesenheit eines die Fließfähigkeit verbessernden festen Additivs, eingesetzt wird.

12. Verfahren nach Anspruch 11, dadurch gekennzeichnet, daß das Additiv unter Magnesiumoxid, Calciumfluorid, Calciumphosphat, pyrogenem Siliziumdioxid und deren Mischungen ausgewählt wird.

13. Verfahren nach Anspruch 11 oder 12, dadurch gekennzeichnet, daß das Additiv in Mengen von 0,1 Gew.-% bis 5 Gew.-%, insbesondere 0,25 Gew.-% bis 1 Gew.-%, jeweils bezogen auf zu oxidierendes Polysaccharid, eingesetzt wird.

14. Verfahren nach einem der Ansprüche 11 bis 13, dadurch gekennzeichnet, daß die Oxidationsreaktion in einem Fließbett oder in einer Wirbelschicht des zu oxidierenden Polysaccharids unter Einsatz von durchströmendem, das Oxidationsmittel enthaltendem Gas durchgeführt wird.

15. Verfahren nach einem der Ansprüche 1 bis 14, dadurch gekennzeichnet, daß das Polysaccharid ein Polyglucosan nativen Ursprungs, insbesondere Stärke und/oder Cellulose, ist.

16. Verfahren nach Anspruch 15, dadurch gekennzeichnet, daß das Polysaccharid eine native Stärke, ausgewählt aus Kartoffelstärke, Weizenstärke, Maisstärke, Tapiokastärke und deren Gemischen, ist.

17. Verfahren nach einem der Ansprüche 1 bis 16, dadurch gekennzeichnet, daß Stickstoffdioxid/Distickstofftetroxid in solchen Mengen eingesetzt wird, daß bei rechnerisch vollständiger Verschiebung des Gleichgewichtes auf die Seite des Stickstoffdioxids dieses in Mengen von 0,1 bis 1 Molequivalenten, bezogen auf den Gehalt an eine primäre Alkoholgruppe enthaltendem Monomerbaustein des Polysaccharids, enthalten ist.

18. Verfahren nach Anspruch 17, dadurch gekennzeichnet, daß als Polysaccharid ein Polyglucosan eingesetzt wird und die Oxidationsreaktion über einen solchen Zeitraum durchgeführt wird, daß das Oxidationsprodukt im statistischen Mittel zu wenigstens 15 Mol-% aus oxidierten Anhydroglucoseeinheiten der Formel I 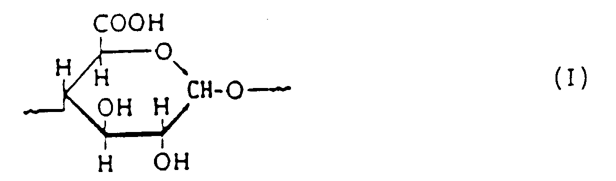 besteht.

19. Verfahren nach Anspruch 18, dadurch gekennzeichnet, daß das Oxidationsprodukt die oxidierten Anhydroglucoseeinheiten der Formel I zu wenigstens 25 Mol-%, vorzugsweise zu wenigstens 35 Mol-% bis 40 Mol-% im Molekül enthält, wobei weiterhin bevorzugt keine wesentlichen Mengen anderer Oxidations-Folgeprodukte vorliegen.

20. Verfahren nach Anspruch 18 oder 19, dadurch gekennzeichnet, daß als Oxidationsprodukt selektiv oxidierte Polyglucosane auf Cellulose- und/oder Stärkebasis vorliegen, die einen Gehalt an oxidierten Anhydroglucoseeinheiten der Formel I bis zu etwa 95 Mol-%, insbesondere im Bereich von etwa 40 Mol-% bis 80 Mol-%, aufweisen.

21. Verfahren nach einem der Ansprüche 1 bis 20, dadurch gekennzeichnet, daß anschließend an die Oxidationsreaktion mindestens ein Teil der Carboxylgruppen des Oxidationsprodukts durch Behandeln mit einer wäßrigen Lösung, die Alkalihydroxid, Ammoniumhydroxid und/oder organische Base enthält, neutralisiert wird.

22. Verwendung von Polycarbonsäuren oder deren Salzen, hergestellt gemäß dem Verfahren nach einem der Ansprüche 1 bis 21, als Builder oder Co-Builder in Wasch- oder Reinigungsmitteln.

23. Verwendung nach Anspruch 22 als Co-Builder in Mengen von 0,5 Gew.-% bis 10 Gew.-%, insbesondere 2 Gew.-% bis 7 Gew.-%, bezogen jeweils auf das Gesamtgewicht des Mittels, in Zeolith als Haupt-Builder enthaltenden Wasch- oder Reinigungsmitteln.

24. Verwendung nach Anspruch 23, dadurch gekennzeichnet, daß das Mittel Zeolith-NaA als Hauptbuilder und Polycarbonsäuren oder deren Salze, hergestellt gemäß dem Verfahren nach einem der Ansprüche 1 bis 21, in Mengenverhältnissen von 3:1 bis 4:1 enthält.

## Claims

1. A process for the production of polycarboxylic acids or salts thereof from polysaccharides by oxidation with nitrogen dioxide/dinitrogen tetroxide with at least partial conversion of the primary alcohol groups of the polysaccharides into carboxyl groups and optionally at least partial neutralization of the carboxylic acid groups formed, the oxidation reaction being carried out in a closed reaction system in the presence of oxygen under pressures of 2 bar to 10 bar and at a temperature of at least 30°C, characterized in that nitrogen dioxide/dinitrogen tetroxide is used in such quantities that, in the event of a theoretically complete shift of the equilibrium onto the nitrogen dioxide side, the nitrogen dioxide is present in quantities of at most 2 mole equivalents, based on the content of monomer unit of the polysaccharide containing one primary alcohol group.

2. A process as claimed in claim 1, characterized in that the oxidation reaction is carried out at temperatures of 30°C to 70°C and more particularly at temperatures of 40°C to 60°C.

3. A process as claimed in claim 1 or 2, characterized in that the oxidation reaction is carried out under pressures of 2 bar to 6 bar, as measured at the reaction temperature.

4. A process as claimed in claim 3, characterized in that the pressure in the reaction system is established by introduction of gaseous oxygen under pressure either once only at the beginning of the reaction or repeatedly, if desired continuously, during the reaction.

5. A process as claimed in claim 4, characterized in that oxygen is used in the form of a mixture with at least one gas which is inert under the reaction conditions, the oxygen making up from 1% by volume to 30% by volume and more particularly from 3% by volume to 10% by volume of the gas mixture.

6. A process as claimed in claim 5, characterized in that helium, argon, carbon dioxide, more particularly nitrogen, or a mixture thereof is used as the inert gas.

7. A process as claimed in claim 5, characterized in that the pressure in the reaction system is established by introduction of air under pressure.

8. A process as claimed in any of claims 4 to 7, characterized in that a pressure of less than 10 bar and, more particularly, in the range from 2 bar to 6 bar is established in the reaction system before the beginning of the oxidation reaction by introduction under pressure of an inert gas, more particularly nitrogen, helium, argon, carbon dioxide or a mixture thereof, and after the beginning of the reaction oxygen or a mixture of 1% by volume to 30% by volume and, more particularly, 3% by volume to 10% by volume of oxygen with one of the inert gases mentioned is repeatedly introduced under pressure, if desired continuously, so that the oxygen partial pressure in the reaction system is in the range from 0.1 bar to 10 bar and more particularly in the range from 0.5 bar to 6 bar.

9. A process as claimed in any of claims 1 to 8, characterized in that the polysaccharide is used in the form of a suspension in a liquid which is substantially inert under the reaction conditions.

10. A process as claimed in claim 9, characterized in that a halogenated hydrocarbon, more particularly carbon tetrachloride, is used as the liquid substantially inert under the reaction conditions.

11. A process as claimed in any of claims 1 to 8, characterized in that the polysaccharide is used in the absence of a suspension medium or solvent and optionally in the presence of a flow-promoting solid additive.

12. A process as claimed in claim 11, characterized in that the additive is selected from magnesium oxide, calcium fluoride, calcium phosphate, pyrogenic silicon dioxide and mixtures thereof.

13. A process as claimed in claim 11 or 12, characterized in that the additive is used in quantities of 0.1% by weight to 5% by weight and more particularly in quantities of 0.25% by weight to 1% by weight, based on the polysaccharide to be oxidized.

14. A process as claimed in any of claims 11 to 13, characterized in that the oxidation reaction is carried out in a moving bed or in a fluidized bed of the polysaccharide to be oxidized using a throughflowing gas containing the oxidizing agent.

15. A process as claimed in any of claims 1 to 14, characterized in that the polysaccharide is a polyglucosan of native origin, more particularly starch and/or cellulose.

16. A process as claimed in claim 15, characterized in that the polysaccharide is a native starch selected from potato starch, wheat starch, corn starch, tapioca starch and mixtures thereof.

17. A process as claimed in any of claims 1 to 16, characterized in that nitrogen dioxide/dinitrogen tetroxide is used in such quantities that, in the event of a theoretically complete shift of the equilibrium onto the nitrogen dioxide side, the nitrogen dioxide is present in quantities of 0.1 to 1 mole equivalent, based on the content of monomer unit of the polysaccharide containing one primary alcohol group.

18. A process as claimed in claim 17, characterized in that a polyglucosan is used as the polysaccharide and the oxidation reaction is carried out over such a period that, on a statistical average, at least 15 mole-% of the oxidation product consists of oxidized anhydroglucose units corresponding to formula I:

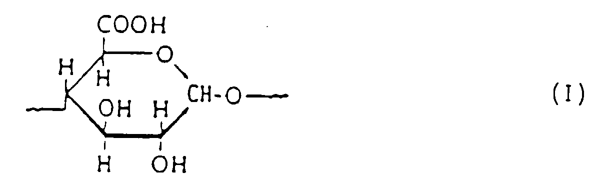

19. A process as claimed in claim 18, characterized in that the oxidation product contains at least 25 mole-% and preferably at least 35 mole-% to 40 mole-% of the oxidized anhydroglucose units of formula I in the molecule, the oxidation product preferably being free from significant quantities of other secondary oxidation products.

20. A process as claimed in claim 18 to 19, characterized in that selectively oxidized polyglucosans based on cellulose and/or starch containing up to about 95 mole-% and, more particularly, from about 40 mole-% to 80 mole-% of oxidized anhydroglucose units corresponding to formula I are present as the oxidation product.

21. A process as claimed in any of claims 1 to 20, characterized in that the carboxyl groups of the oxidation product are at least partly neutralized after the oxidation reaction by treatment with an aqueous solution containing alkali metal hydroxide, ammonium hydroxide and/or organic base.

22. The use of polycarboxylic acids or salts thereof produced by the process claimed in any of claims 1 to 21 as builders or co-builders in detergents or cleaning preparations.

23. The use claimed in claim 22 as co-builders in quantities of 0.5% by weight to 10% by weight and, more particularly, 2% by weight to 7% by weight, based on the total weight of the particular product, in detergents or cleaning products containing zeolite as principal builder.

24. The use claimed in claim 23, characterized in that the detergent or cleaning product contains zeolite NaA as principal builder and polycarboxylic acids or salts thereof produced by the process claimed in any of claims 1 to 21 in quantity ratios of 3:1 to 4:1.

## Revendications

1. Procédé de fabrication d'acides polycarboxyliques ou de sels de ceux-ci à partir de polysaccharides, par oxydation avec du dioxyde/tétroxyde d'azote, avec transformation d'au moins une partie des groupes d'alcool primaire des polysaccharides en groupes carboxyle, ainsi que, le cas échéant, avec neutralisation au moins partielle des groupes d'acide carboxylique formés, la réaction d'oxydation étant réalisée dans un système réactionnel fermé à des pressions de 2 à 10 bars et à une température d'au moins 30 °C en présence d'oxygène, caractérisé en ce que le dioxyde/tétroxyde d'azote est mis en oeuvre en quantités telles qu'en cas de déplacement complet de l'équilibre, déterminé par voie de calcul, du côté du dioxyde d'azote, celui-ci est contenu en quantités de maximum 2 équivalents molaires, par rapport à la teneur du constituant monomère du polysaccharide contenant un groupe d'alcool primaire.

2. Procédé selon la revendication 1, caractérisé en ce que la réaction d'oxydation est réalisée à des températures de 30 à 70 °C, en particulier de 40 à 60 °C.

3. Procédé selon la revendication 1 ou 2, caractérisé en ce que la réaction d'oxydation est réalisée à des pressions de 2 à 6 bars, déterminées à la température réactionnelle.

4. Procédé selon la revendication 3, caractérisé en ce que la pression dans le système réactionnel est ajustée par compression d'oxygène gazeux, qui a lieu une seule fois au début de la réaction ou plusieurs fois, éventuellement en continu, au cours de la réaction.

5. Procédé selon la revendication 4, caractérisé en ce que l'on met en oeuvre l'oxygène en mélange avec au moins un gaz inerte dans les conditions réactionnelles, la proportion de l'oxygène dans le mélange gazeux atteignant 1 à 30 % vol., en particulier 3 à 10 % vol.

6. Procédé selon la revendication 5, caractérisé en ce que l'on met en oeuvre comme gaz inerte, de l'hélium, de l'argon, du dioxyde de carbone, en particulier de l'azote, ou un mélange de ceux-ci.

7. Procédé selon la revendication 5, caractérisé en ce que la pression dans le système réactionnel est ajustée par compression d'air.

8. Procédé selon une des revendications 4 à 7, caractérisé en ce qu'une pression inférieure à 10 bars, en particulier de 2 à 6 bars, est ajustée dans le système réactionnel avant le début de la réaction d'oxydation, par compression d'un gaz inerte, en particulier, de l'azote, de l'hélium, de l'argon, du dioxyde de carbone ou un mélange de ceux-ci, et que de l'oxygène ou un mélangé constitué de 1 à 30 % vol., en particulier, de 3 à 10 % vol. d'oxygène avec un gaz inerte cité est comprimé plusieurs fois, éventuellement en continu après le début de la réaction d'oxydation, de manière que la pression partielle d'oxygène dans le système réactionnel atteigne 0,1 à 10 bars, en particulier, 0,5 à 6 bars.

9. Procédé selon une des revendications 1 à 8, caractérisé en ce que le polysaccharide est mis en oeuvre sous la forme d'une suspension dans un liquide largement inerte dans les conditions réactionnelles.

10. Procédé selon la revendication 9, caractérisé en ce que l'on met en oeuvre comme liquide largement inerte dans les conditions réactionnelles, un hydrocarbure halogéné, en particulier, du tétrachlorure de carbone.

11. Procédé selon une des revendications 1 à 8, caractérisé en ce que le polysaccharide est mis en oeuvre en l'absence d'agent de suspension ou de solvant, éventuellement en présence d'un additif solide améliorant la fluidité.

12. Procédé selon la revendication 11, caractérisé en ce que l'additif est sélectionné parmi l'oxyde de magnésium, le fluorure de calcium, le phosphate de calcium, le dioxyde de silicium pyrogène et les mélanges de ceux-ci.

13. Procédé selon la revendication 11 ou 12, caractérisé en ce que l'additif est mis en oeuvre en proportions de 0,1 à 5 % en poids, en particulier, de 0,25 à 1 % en poids, dans chaque cas par rapport au polysaccharide à oxyder.

14. Procédé selon une des revendications 11 à 13, caractérisé en ce que la réaction d'oxydation est réalisée dans un lit fluidisé ou dans une couche turbulente du polysaccharide à oxyder, en utilisant un gaz contenant l'agent d'oxydation et parcourant ledit fluidisé ou ladite couche turbulente.

15. Procédé selon une des revendications 1 à 14, caractérisé en ce que le polysaccharide est un polyglucosane d'origine native, en particulier de l'amidon et/ou de la cellulose.

16. Procédé selon la revendication 15, caractérisé en ce que le polysaccharide est un amidon natif, sélectionné parmi les amidons de pomme de terre, de froment, de maïs et de tapioca, et les mélanges de ceux-ci.

17. Procédé selon une des revendications 1 à 16, caractérisé en ce que le dioxyde/tétroxyde d'azote est mis en oeuvre en quantité telle qu'en cas de déplacement complet de l'équilibre, déterminé par voie de calcul, du côté du dioxyde d'azote, celui-ci est présent en concentration de 0,1 à 1 équivalent molaire, par rapport à la teneur en l'élément de monomère contenant un groupe d'alcool primaire du polysaccharide.

18. Procédé selon la revendication 17, caractérisé en ce que l'on met en oeuvre comme polysaccharide, un polyglucosane et en ce que la réaction d'oxydation est réalisée pendant une durée telle que le produit d'oxydation est constitué en moyenne statistique d'au moins 15 moles % d'unités d'anhydroglucose oxydées de la formule I

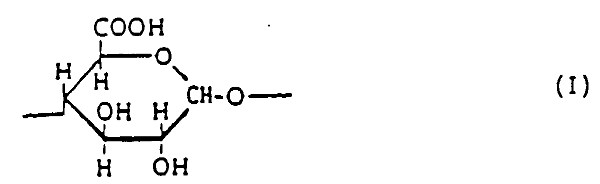

19. Procédé selon la revendication 18, caractérisé en ce que le produit d'oxydation renferme les unités d'anhydroglucose oxydées de la formule I à au moins 25 moles %, en particulier à au moins 35 à 40 moles %, aucune quantité importante d'autres produits d'oxydation subséquents n'étant en outre présente de préférence.

20. Procédé selon la revendication 18 ou 19, caractérisé en ce que sont présentes comme produit d'oxydation, des polyglucosanes oxydés sélectivement à base de cellulose et/ou d'amidon, qui possèdent une teneur en unités d'anhydroglucose oxydées de la formule I jusqu'à environ 95 moles %, en particulier, dans l'intervalle d'environ 40 à 80 moles %.

21. Procédé selon une des revendications 1 à 20, caractérisé en ce qu'à la suite de la réaction d'oxydation, au moins une partie des groupes carboxyle du produit d'oxydation est neutralisée par traitement avec une solution aqueuse, qui renferme de l'hydroxyde de métal alcalin, de l'hydroxyde d'ammonium et/ou une base organique.

22. Utilisation des acides polycarboxyliques ou de leurs sels, fabriqués conformément au procédé selon une des revendications 1 à 21, comme adjuvant ou comme co-adjuvant de produits de lavage ou de nettoyage.

23. Utilisation selon la revendication 22, comme co-adjuvant, en proportions de 0,5 à 10 % en poids, en particulier de 2 à 7 % en poids, dans chaque cas par rapport au poids total du produit, dans des produits de lavage ou de nettoyage qui renferment de la zéolithe comme adjuvant principal.

24. Utilisation selon la revendication 23, caractérisée en ce que le produit renferme de la zéolithe NaA comme adjuvant principal et des acides polycarboxyliques ou des sels de ceux-ci, fabriqués conformément au procédé selon une des revendications 1 à 21, dans un rapport pondéral de 3:1 à 4:1
